# EUROPEAN PATENT SPECIFICATION

(11) **EP 2 503 289 B1**
(45) Date of publication and mention of the grant of the patent: **22.06.2016**
(21) Application number: 11002357.9
(22) Date of filing: 22.03.2011
(51) Int. Cl.: G01C 21/32, G06F 17/30

(54) **Management of icons for digital maps**
Verwaltung von Symbolen für digitalen Karten
Gestion des icônes pour cartes numériques

(43) Date of publication of application: 26.09.2012
(73) Proprietor: Harman Becker Automotive Systems GmbH, 76307 Karlsbad (DE)
(72) Inventor: Spindler, CC, 76135 Karlsruhe (DE); Ivanov, Vladimir, 81375 München (DE); Fischer, Martin, 80805 München (DE); Schütz, Simon, 70195 Stuttgart (DE)
(74) Representative: Grünecker Patent- und Rechtsanwälte PartG mbB

(56) References cited:
- JP-A- H1 089 990
- US-A- 5 734 873
- US-A1- 2002 065 605
- US-A1- 2008 021 644
- US-B2- 7 665 040
- Anonymous: "iGO 8 User Manual -Navigation software for mobile devices", iGO My Way , December 2008 (2008-12), pages 1-92, XP002659786, Retrieved from the Internet: URL:http://marketing.igomyway.com/USER_MAN UALS/iGO_8/iGO8_R3_PDA_UserManual_English_ UK.pdf [retrieved on 2011-09-22]
- Anonymous: "How to install POI Icons ig08", Austech , February 2010 (2010-02), XP002659832, Retrieved from the Internet: URL:http://www.austech.info/gps/33027-how- install-poi-icons-ig08.html [retrieved on 2011-09-22]
- Anonymous: "Thread: How do you add/merge bmp poi files?", Naviextras , August 2008 (2008-08), XP002659833, Retrieved from the Internet: URL:https://www.naviextras.com/shop/mvnfor um/viewthread?thread=1746 [retrieved on 2011-09-22]

## Description

### Field of Invention

The present invention relates to digital maps representing towns and landscapes that can be used for route guidance by a navigation system and, in particular, it relates to the management and display of icons in digital maps.

### Prior Art

The use of navigation systems, in particular, in vehicles as automobiles becomes increasingly prevalent. Usually on board navigation computer systems analyze the combined data provided by GPS (Global Positioning System), motion sensors as ABS wheel sensors as well as a digital map and thereby determine the actual position and velocity of a vehicle with increasing preciseness.

Known navigation systems typically make use electronic digital maps to represent cartographic features, as streets, buildings and rivers, and make use of a medium such as a compact disk or a digital video disc to store the data that relates to the cartographic features. After map matching the actual position of the user is indicated in the digital map. By acoustic and/or visualized information the user is guided to the predetermined destination.

Some navigation systems are able to display detailed digital maps indicating routes to destinations, the types of manoeuvres to be taken at various locations as junctions as well as different kinds of points of interest as, for example, gas stations or restaurants and also landmarks. As the vehicle changes position, either the vehicle position mark on the displayed image changes, or the digital map is scrolled, while the vehicle position mark is fixed at a predetermined position.

More elaborated navigation systems provide enlarged views, for example, of junctions on the guide route, where the driver should turn, in order to help the driver to identify the route to be taken to the predetermined destination more accurately. The displayed images represent simplified synthesized views from the driver's perspective. However, a 2-dimensional representation can confuse the driver, in particular, if roads are intersecting a different height levels or in rotary turns with roads in close proximity. Herein, the terms 'road' and 'street' are used in an interchangeable manner.

Recently, various navigation systems have been developed that have provided algorithms for transforming data from a geographic database into a 3-dimensional perspective view which, in principle, is much more easily understood by many drivers. Elaborated systems allow for displaying the intersection approached by the vehicle at variable angles relative to the road depending on the complexity of the intersection. Herein, the terms 'intersection' and 'junction' are used in an interchangeable way.

In order to provide the navigation functions the navigation systems make use of one or more detailed databases that comprise data which represent physical features of a geographic region. The employed navigation database may comprise a main image file comprising bitmap images consisting, e.g., of bitmap of the road geometry signposts, landmarks, the skyline etc. The database may comprise a main image file comprising bitmap images and/or vector graphics consisting, e.g., of bitmap of the road geometry, signposts, landmarks, the skyline etc.

Characteristic elements of digital maps used for navigation purposes are icons. Icons are symbols providing information about the traffic situation, points of interest, route guidance, traffic signs, etc. Icons can be part of signposts that comprise relatively big signs displaying *inter alia* the direction to a city, signpost icons in form of a graphic representation of facilities as an industrial area, a soccer stadium, an airport, etc., road number icons indicating the number of a road, a highway, etc., an exit number icon indicating the road number of a road branching at an intersection (junction).

The iGO8 navigation engine of NNG, released in April 2008, employs single files that each store a plurality of POI icons.

J However, retrieval of icons stored in a navigation database is time consuming. In particular, in the context of embedded systems as vehicle navigation systems with limited computational resources it is desirable to shorten the access time needed to load and display icons in a digital map. Thus, it is a problem underlying the present invention to provide a means for fast retrieval of icons from a database for displaying the same in a digital map.

### Description of the Invention

The present invention addresses the above-mentioned problem and provides a method for the management of icons in a navigation database comprising storing data for a plurality of icons in one single data array representing an image containing the plurality of icons. Each icon is given by data of the icon. Herein, by the term icon, in principal, any two- or three-dimensional symbol is comprised. Depending on the application an icon is a two-dimensional symbol (graphics). According to the invention and contrary to the prior art the data of a number of icons is stored in one data array. The data array represents an image, for example, in the png format, wherein each of these icons has a defined location. For example, the data array represents an image with a number n₁ of icons in the first row, a number n₂ of icons in the second row and so on to a number of icons nₘ in the m-th and last row of the image. Herein, n₁ to nₘ may be the same integer number.

In fact, according to an embodiment one single big png image is calculated from individual png images representing icons. In addition, to the big png image entries representing references to the positions of the individual png images comprised in the big png image are stored.

Consequently, the icons have not to be read out separately when they are needed for the display in a digital map used for navigation purposes. Rather, all icons of the data array can be read into a memory once and hold for subsequent usage in the digital map. In particular, the method, thus, may comprise comprising loading the single data array in a graphic memory (video memory) of a navigation system. Once loaded into the memory each of the plurality icons of the data array can quickly be retrieved from the memory for display in a digital map. There is no delay caused by individual loading of icons, as it disadvantageously occurs in the art.

The data array is a table comprising information on the width, height, and coordinates (x- and y-coordinate values) of the icons in the image represented by the data array and comprising the icons at particular positions. Each of the plurality of icons given in the table stored in the memory of the navigation system can be retrieved for displaying the same in a digital map by referring to the coordinates of the icon in the image. Moreover, it may be referred to the height and width of the icon as well to receive further information valuable for deciding on the actual position of the icon in the digital map. Appropriate positioning of icons in a digital map is of importance with respect to the readability of the icons, in particular, in the context of three-dimensional digital maps used for navigation purposes.

The method further comprises storing another plurality of icons in another single data array. The first mentioned and the another plurality of icons may differ from each other such that, whenever an icon of the first mentioned plurality of icons is needed for display in the digital map, no icon of the other plurality of icons will (very probably) be needed for concurrent display. Thus, only one of the pluralities of icons is loaded in the memory while the other one is stored in the navigation database and will be loaded at another time in the memory of the navigation system.

For example, the navigation system may provide an off-road navigation mode and a particular plurality of icons are loaded in the memory only if the off-road mode is selected by a user, whereas that plurality of icons will never be loaded in the usual on-road mode. According to another example, the first mentioned plurality of icons may consist of icons needed during navigation in day-time only whereas the other plurality of icons may consist of icons needed during navigation in night-time only or vice versa. Consequently, only icons stored in a single data array (for example, a table as described above) that are used in the actual navigation process are loaded in the memory for fast retrieval.

One or more icons can be displayed as part of a signpost. Signposts are signs that in the physical environment, for example, are positioned at highway intersections (in particular, intersections of German *Bundesstraßen* and *Autobahnen*) and indicate the direction to a city, facilities as an industrial area, a soccer stadium, an airport, etc., the number of a road, a highway, etc., and/or the road number of a road branching at an intersection (junction).

A signpost is displayed in a digital map in form of a background of the signpost and some signpost text. The signpost may additionally comprise at least one signpost icon. A signpost icon may indicate / represent symbolically an industrial area, a soccer stadium, an airport, etc. In the context of the display of a signpost the inventive method may also comprise storing a background of a signpost separately of the plurality of icons. The separately stored (data of a) background can be retrieved from the navigation database when a signpost with that background has to be displayed and icons to be displayed in the signpost can be retrieved from the graphic memory wherein the plurality of icons have been loaded.

The method may further comprise storing a reference between icons of the plurality of icons and the background of the signpost in the navigation database. The reference represents a (data) link between the icon and the background of the signpost. This reference allows for composing the signpost for displaying the same without the need for determining the appropriate background of the signpost for a particular signpost by online calculation. According to this example the suitable background of the signpost is linked to the icon beforehand thereby avoiding the risk of a false assignment during online calculation.

It is also provided a method for route guidance implemented in a navigation system, in particular, a vehicle navigation system, with a display device comprising the steps of the method according to one of the above-described examples and providing guidance information to a user of the navigation system.

Furthermore, it is provided a computer program product, comprising one or more computer readable media having computer-executable instructions for performing the steps of the method according to one of the above-described examples.

The above-mentioned problem is also addressed by a navigation database comprising digital map data and one or more data arrays each comprising data of a plurality of icons. In the navigation database each data array may comprise a plurality of icons is a table comprising information on the width, height, and coordinates of the icons in the image.

Furthermore, it is provided a navigation system, in particular, a vehicle navigation system, comprising one of the above examples and a display means configured to display a digital map including at least one icon of the plurality of icons.

In all of the above-described embodiments the involved digital map can be a two-dimensional or three-dimensional digital mal, particularly, comprising three-dimensional junction views.

## Claims

1. Method for the management of icons in a navigation database comprising:
storing data for a plurality of icons in one single data array representing a first single image containing the plurality of icons;
storing data for another plurality of icons in another single data array representing a second single image containing the other plurality of icons;
loading only one of the single data arrays in a graphic memory of a navigation system according to a navigation mode of the navigation system; and
retrieving at least one icon from the single data array loaded in the graphic memory for display on a display device;
wherein:
the first single image is calculated from individual images representing the plurality of icons individually; and
the second single image is calculated from individual images representing the other plurality of icons individually; and
wherein each of the data arrays is a table comprising information on the width, height, and coordinates of the icons in the corresponding image and comprising the icons at particular positions of the corresponding image.

2. The method according to claim 1, further comprising storing a background of a signpost separately of the plurality of icons.

3. The method according to claim 2, further comprising storing a reference between at least one of the plurality of icons and the background.

4. Method for displaying icons in a digital map comprising the method according to claim 2 or 3 and comprising
retrieving the stored background of the signpost;
displaying the retrieved background in the digital maps; and
displaying the retrieved icon on the displayed background.

5. A method for route guidance implemented in a navigation system, in particular, a vehicle navigation system, with a display device comprising the steps of the method according to one of the preceding claims and providing guidance information to a user of the navigation system.

6. Computer program product, comprising one or more computer readable media having computer-executable instructions for performing the steps of the method according to one of the preceding claims.

7. A navigation system, in particular, a vehicle navigation system, comprising:
a navigation database comprising digital map data and two or more data arrays each comprising data of a plurality of icons and each representing a single image containing the corresponding plurality of icons;
a graphic memory; and
a display means configured to display a digital map including at least one icon of the plurality of icons;
wherein the navigation system is adapted to load only one of the two or more data arrays in the graphic memory according to a navigation mode of the navigation system and to retrieve the at least one icon from the data array loaded in the graphic memory; and
wherein each data array comprising a plurality of icons is a table comprising information on the width, height, and coordinates of the icons in the corresponding single image and comprising the icons at particular positions of the corresponding image.

## Patentansprüche

1. Verfahren für die Verwaltung von Symbolen in einer Navigationsdatenbank, umfassend:
Speichern von Daten für eine Mehrzahl von Symbolen in einem einzelnen Daten-Array,
welches ein erstes einzelnes Bild darstellt, das die Mehrzahl der Symbole enthält;
Speichern von Daten für eine weitere Mehrzahl von Symbolen in einem weiteren einzelnen Daten-Array, welches ein zweites einzelnes Bild darstellt, das die weitere Mehrzahl von Symbolen enthält;
Laden nur eines der einzelnen Daten-Arrays in einen Grafikspeicher eines Navigationssystems, entsprechend eines Navigationsmodus des Navigationssystems; und
Abrufen mindestens eines Symbols aus dem einzelnen Daten-Array, das in den Grafikspeicher für die Anzeige auf einem Anzeigegerät geladen wurde;
wobei:
das erste einzelne Bild aus einzelnen Bildern berechnet wird, die die Mehrzahl der Symbole einzeln darstellen; und
das zweite einzelne Bild aus einzelnen Bildern berechnet wird, die die weitere Mehrzahl von Symbolen einzeln darstellen; und
wobei jedes der Daten-Arrays eine Tabelle ist, welche Informationen über die Breite,
Höhe und Koordinaten der Symbole im entsprechenden Bild umfasst und die Symbole auf bestimmten Positionen des entsprechenden Bildes umfasst.

2. Verfahren nach Anspruch 1, ferner umfassend das Speichern eines Hintergrunds eines Verkehrsschilds getrennt von der Mehrzahl der Symbole.

3. Verfahren nach Anspruch 2, ferner umfassend das Speichern einer Referenz zwischen mindestens einem aus der Mehrzahl der Symbole und dem Hintergrund.

4. Verfahren zum Anzeigen von Symbolen auf einer digitalen Karte, umfassend das
Verfahren nach Anspruch 2 oder 3 und umfassend
Abrufen des gespeicherten Hintergrunds des Verkehrsschilds;
Anzeigen des abgerufenen Hintergrunds auf den digitalen Karten; und
Anzeigen des abgerufenen Symbols vor dem angezeigten Hintergrund.

5. Verfahren zur Routenführung, das in einem Navigationssystem ausgeführt wird, insbesondere einem Fahrzeugnavigationssystem, mit einem Anzeigegerät, umfassend die Schritte des Verfahrens nach einem der vorangegangenen Ansprüche und zum Bereitstellen von Führungsinformationen für den Nutzer des Navigationssystems.

6. Computerprogrammprodukt, umfassend ein oder mehrere computerlesbare Medien, welche computerausführbare Befehle zum Ausführen der Schritte des Verfahrens nach einem der vorangegangen Ansprüche aufweisen.

7. Navigationssystem, insbesondere ein Fahrzeugnavigationssystem, umfassend:
eine Navigationsdatenbank, welche digitale Kartendaten und zwei oder mehr Daten-Arrays umfasst, die jeweils Daten einer Mehrzahl von Symbolen umfassen und jeweils ein einzelnes Bild darstellen, welches die entsprechende Mehrzahl von Symbolen enthält;
einen Grafikspeicher; und
ein Anzeigemittel, das konfiguriert ist, um eine digitale Karte, einschließlich mindestens eines Symbols aus der Mehrzahl der Symbole, anzuzeigen;
wobei das Navigationssystem geeignet ist, nur eines der zwei oder mehr Daten-Arrays in den Grafikspeicher entsprechend eines Navigationsmodus des Navigationssystems zu laden und um das mindestens eine Symbol aus dem Daten-Array abrufen, welches in den Grafikspeicher geladen wurde; und
wobei jedes Daten-Array, welches eine Mehrzahl von Symbolen umfasst, eine Tabelle ist, welche Informationen über Breite, Höhe und Koordinaten der Symbole im entsprechenden einzelnen Bild umfasst und welche die Symbole auf bestimmten Positionen des entsprechenden Bildes umfasst.

## Revendications

1. Procédé pour la gestion d'icônes dans une base de données de navigation, comprenant :
le stockage de données pour une pluralité d'icônes dans une matrice de données unique représentant une première image unique contenant la pluralité d'icônes ;
le stockage de données pour une autre pluralité d'icônes dans une autre matrice de données unique représentant une deuxième image unique contenant l'autre pluralité d'icônes ;
le chargement seulement d'une des matrices de données uniques dans une mémoire graphique d'un système de navigation en fonction d'un mode de navigation du système de navigation ; et
la récupération d'au moins une icône à partir de la matrice de données unique chargée dans la mémoire graphique pour l'affichage sur un dispositif d'affichage ;
dans lequel :
la première image unique est calculée à partir d'images individuelles représentant individuellement la pluralité d'icônes ; et
la deuxième image unique est calculée à partir d'images individuelles représentant individuellement l'autre pluralité d'icônes ; et
dans lequel chacune des matrices de données est une table comprenant des informations sur la largeur, la hauteur et les coordonnées des icônes dans l'image correspondante et comprenant les icônes au niveau de positions particulières de l'image correspondante.

2. Procédé selon la revendication 1, comprenant en outre le stockage d'un arrière-plan d'un poteau indicateur séparément de la pluralité d'icônes.

3. Procédé selon la revendication 2, comprenant en outre le stockage d'une référence entre au moins une de la pluralité d'icônes et l'arrière-plan.

4. Procédé pour l'affichage d'icônes dans une carte numérique comprenant le procédé selon la revendication 2 ou 3 et comprenant
la récupération de l'arrière-plan stocké du poteau indicateur ;
l'affichage de l'arrière plan récupéré dans les cartes numériques ; et
l'affichage de l'icône récupérée sur l'arrière-plan affiché.

5. Procédé de guidage routier mis en oeuvre dans un système de navigation, en particulier un système de navigation pour véhicule, avec un dispositif d'affichage comprenant les étapes du procédé selon une des revendications précédentes et fournissant des informations de guidage à un utilisateur du système de navigation.

6. Produit de programme informatique, comprenant un ou plusieurs supports lisibles par ordinateur comportant des instructions exécutables par ordinateur pour effectuer les étapes du procédé selon une des revendications précédentes.

7. Système de navigation, en particulier un système de navigation pour véhicule, comprenant :
une base de données de navigation comprenant des données de carte numérique et au moins deux matrices de données comprenant chacune des données d'une pluralité d'icônes et représentant chacune une image unique contenant la pluralité d'icônes correspondante ;
une mémoire graphique ; et
un moyen d'affichage configuré pour afficher une carte numérique comprenant au moins une icône de la pluralité d'icônes ;
dans lequel le système de navigation est adapté pour charger seulement une des au moins deux matrices de données dans la mémoire graphique en fonction d'un mode de navigation du système de navigation et pour récupérer l'au moins une icône à partir de la matrice de données chargée dans la mémoire graphique ; et
dans lequel chaque matrice de données comprenant une pluralité d'icônes est une table comprenant des informations sur la largeur, la hauteur et les coordonnées des icônes dans l'image unique correspondante et comprenant les icônes au niveau de positions particulières de l'image correspondante.
